# EUROPÄISCHE PATENTSCHRIFT

(11) **EP 0 478 718 B1**
(45) Veröffentlichungstag und Bekanntmachung des Hinweises auf die Patenterteilung: **15.05.1996**
(21) Anmeldenummer: 91902943.9
(22) Anmeldetag: 18.01.1991
(51) Int. Cl.: C25C 7/02, C02F 1/46

(54) **ELEKTRODENANORDNUNG FÜR ELEKTROLYTISCHE ZWECKE**
ELECTRODE ARRANGEMENT FOR ELECTROLYTIC PURPOSES
MONTAGE D'ELECTRODE POUR PROCEDES ELECTROLYTIQUES

(30) Priorität: 17.03.1990 DE 9003162 U
(43) Veröffentlichungstag der Anmeldung: 08.04.1992
(73) Patentinhaber: HERAEUS ELEKTROCHEMIE GMBH, D-63450 Hanau (DE)
(72) Erfinder: MAYR, Max, D-8755 Alzenau (DE); BLATT, Wolfgang, D-6480 Wächtersbach (DE); HEINKE, Harri, D-6455 Erlensee (DE)
(74) Vertreter: Grimm, Ekkehard
(86) Internationale Anmeldenummer: EP9100081
(87) Internationale Veröffentlichungsnummer: WO9114804

(56) Entgegenhaltungen:
- EP-A- 0 071 443
- EP-A- 0 151 055
- EP-A- 0 164 430
- EP-A- 0 268 738

## Beschreibung

Die Erfindung betrifft eine Elektrodenanordnung für elektrolytische Zwecke, insbesondere zur elektrolytischen Abscheidung von Metallen aus Metallionen enthaltender Flüssigkeit, bestehend aus einem aus Seitenstegen und Querstegen gebildeten Rahmen mit einer aus elektrisch isolierendem, korrosionsbeständigem Kunststoff bestehenden Oberfläche und einer zwischen seinen Seitenstegen angeordneten plattenförmigen Elektrode, wobei wenigstens zwei Seitenstege als Abstandshalter ausgebildet sind.

Aus der EP-A-036 640 ist eine Elektrodenanordnung in einer Metall-Rückgewinnungszelle zur Reinigung von industriellen Prozeßlösungen und Abwässern in einem Behälter bekannt, welche zur Halterung von plattenförmigen Elektroden einen offenen Rahmen aus parallelen Seitenstreifen als Abstandselemente aufweist, der aus elektrisch isolierendem, korrosionsbeständigem Kunststoff besteht; beidseitig der Anode sind Kathoden in einem durch den Rahmen vorgegebenen Abstand angeordnet. Der Abstand zwischen den Elektroden muß dabei groß genug sein, um Platz für abgeschiedene Metalle freizuhalten.

Weiterhin ist aus dem DE-U-17 60 927 eine Elektrode für elektrolytische Herstellungsverfahren von Perverbindungen bekannt, welche aus Platin in Form einer dünnen Folie, eines Bandes oder eines Netzes besteht, die von einem separaten, gleichzeitig als Stromzuführung dienenden Elektrodengerüst aus einem elektrisch gut leitenden, jedoch elektrochemisch unbeständigen Metall gehalten wird; das Elektrodengerüst ist mit einem Mantel aus Tantal umkleidet, an dessen Oberfläche sich bei erstmaliger anodischer Schaltung eine dünne Haut aus Tantaloxyd bildet.

Weiterhin ist es aus der US-A-4,399,020 bekannt, zur Rückgewinnung bzw. Abscheidung von Metallen aus Lösungen in einem Trog aus elektrisch isolierendem Material eine Vielzahl von wechselweise angeordneten plattenförmigen Anoden und Kathoden mit schwammartiger Struktur ohne Diaphragma oder Membran einzusetzen, wobei die Kathoden im wesentlichen senkrecht zu ihrer Plattenfläche von einer Abwasserlösung durchströmt werden. Dabei werden aus dem Abwasser die Kationen der im Abwasser enthaltenen Metalle auf den Kathoden abgeschieden. Mit zunehmender Betriebsdauer der Zelle werden die Poren der Kathode nach und nach durch die Strömung behindernde Metallabscheidungen zugesetzt. Da die verstopften, ehemals schwammförmigen Kathoden die Durchströmung der Zelle blockieren, müssen sie häufig erneuert werden.

Als problematisch erweist sich bei der aus der EP-A-36 640 bekannten Anordnung, daß beladene Kathoden nur unter Schwierigkeiten zu entnehmen sind. Zur Abtrennung des auf den Kathoden abgeschiedenen Materials muß die Zelle auseinandergenommen werden, wobei die Rahmenstruktur mechanisch aufgelöst wird, so daß eine rasche Austauschbarkeit der Elektroden nicht ohne weiteres möglich ist. Darüber hinaus sind zur Montage und Demontage der Zellen aufgrund ihrer komplizierten Struktur fachmännische Kenntnisse erforderlich.

Die Erfindung stellt sich die Aufgabe, eine Elektrodenanordnung zu schaffen, die geringe Kosten für das Elektrodenmaterial verursacht, sowie eine kostengünstige und leicht zu handhabende Halterung aufweist und eine sichere, einfache Elektrodenkontaktierung ermöglicht.

Die Aufgabe wird erfindungsgemäß dadurch gelöst, daß die Elektrode aus einer ungewalzten Streckmetall-Folie besteht, die wenigstens 85 Gewichts-% Kupfer, Nickel, Zinn oder Blei enthält und eine Dicke von 0,03 bis 0,3 mm sowie eine Stegbreite im Bereich von 2,2 bis 6 mm aufweist und daß die Streckmetall-Folie mit einem Kontaktstreifen elektrisch und mechanisch fest verbunden ist, welcher mit einer Plattenfahne versehen ist.

Vorteilhafte Ausgestaltungen der Erfindung sind in den Unteransprüchen angegeben.

In einer bevorzugten Ausführungsform weisen die Elektrodenplatten eine Wandstärke im Bereich von 0,04 bis 0,25 mm auf, wobei das Verhältnis der Wandstärke zum Abstand benachbarter Elektrodenplatten im Bereich von 1 zu 50 bis 1 zu 300 liegt. Der Abstand wird dabei durch die Dicke der Seitenstege des Rahmens vorgegeben. Als besonders zweckmäßig hat sich eine Wandstärke von 0,1 mm erwiesen.

Die zur Verbesserung der Kontaktierung vorgesehen Kontaktstreifen werden seitlich bzw. im oberen oder unteren Bereich auf der Elektrodenplatte angeordnet, wobei diese jeweils mit einer Plattenfahne sowie gegebenenfalls mit Kontaktdrähten versehen sind.

Als vorteilhaft erweist sich die mit zunehmender Abscheidung auftretende Vergrößerung der Elektrodenfläche, wobei durch Abstandshalter eine ausreichende Elektrolytzufuhr gewährleistet ist; ein weiterer Vorteil liegt in der verhältnismäßig einfachen Handhabung, da der Elektrodenaustausch nunmehr in Form des Austausches einer Einzelelektrode erfolgen kann; beim Einsatz in einer Mehr-Elektrodenanlage ist es aufgrund der gegenseitigen Isolation der Elektroden dabei möglich, die der jeweiligen Position der Elektrode entsprechende optimale Stromdichte so einzustellen, so daß alle Elektroden mit einer gleichmäßigen Abscheidung entnommen werden können.

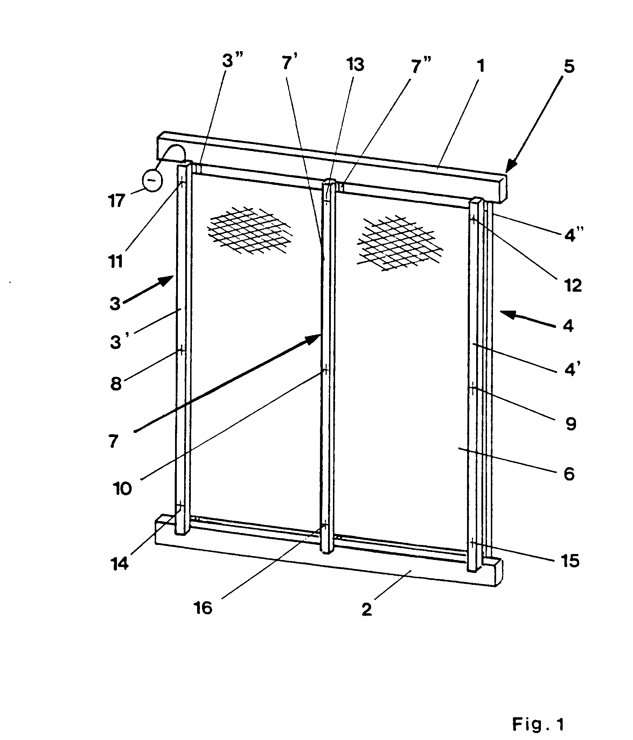

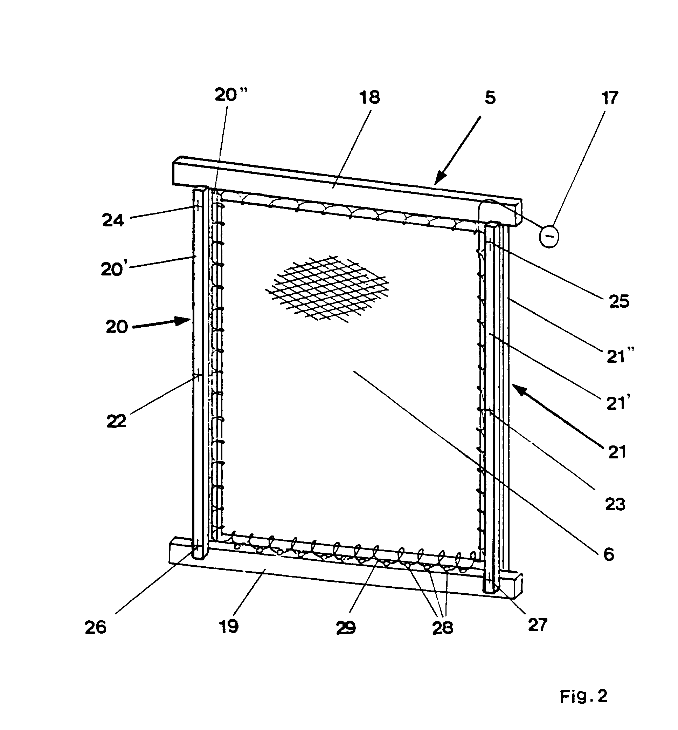

Im folgenden ist der Gegenstand der Erfindung anhand der Figuren 1 und 2 näher erläutert:
- Figur 1: zeigt eine durch Verbinden von Querstegen und Seitenstegen eines Rahmens aufgebaute Elektrodenanordnung, wobei die Elektrodenplatte zwischen Seitenstegen des Rahmens eingespannt ist
- Figur 2: zeigt eine Elektrodenanordnung mit einem ebenfalls aus Quer- und Seitenstegen bestehenden Rahmen, bei dem die Elektrodenplatte durch Spannfäden innerhalb des Rahmens befestigt ist.

Gemäß Figur 1 weist die Elektrodenanordung einen oberen und einen unteren Quersteg 1,2 auf, wobei die beiden Querstege durch zwei zu den Querstegen vertikal angeordnete Seitenstege 3,4 zu einem Rahmen 5 verbunden sind, in dem die Elektrode 6 gehaltert ist. Zur Stabilisierung des Rahmens 5 ist zusätzlich ein Mittelsteg 7 vorgesehen, welcher ebenfalls mit den beiden Querstegen verbunden ist. Die Seitenstege 3,4 und der Mittelsteg 7 bestehen jeweils aus Seitenholmen 3", 4" und einem Mittelholm 7", die an ihren Enden jeweils mit den Querstegen 1, 2 durch Verschweißen fest verbunden sind, und aus darauf aufgebrachten Seitenholmen 3', 4' und einem Mittelholm 7', die durch Verschraubung auf den Holmen 3", 4" und 7" befestigt sind.

Zwischen den zueinander parallel angeordneten Holmen 3', 3" 4', 4" und 7', 7" ist die Elektrode 6 angeordnet, wobei im mittleren Bereich die Holme der beiden Seitenstege 3,4 durch Schrauben 8,9 und die Holme des Mittelstegs 7 durch Schrauben 10 miteinander verbunden sind; die Schrauben 8,9,10 sind durch die Elektrode 6 hindurchgeführt. Entsprechend sind jeweils im oberen Bereich der Seitenstege 3,4 sowie des Mittelstegs 7 Schrauben 11,12,13 vorgesehen, welche die jeweiligen Holme der Seitenteile miteinander verbinden, jedoch oberhalb der Elektrode 6 angeordnet sind und für deren Planlage sorgen. Entsprechende Schrauben unterhalb der

Elektrode 6 für die beiden Seitenstege 3,4, und den Mittelsteg 7 sind mit den Bezugsziffern 14,15,16 bezeichnet und sorgen in diesem Bereich ebenfalls für die Planlage der Elektrode. Der Abstand zwischen den Enden der Holme der Seitenstege 3,4 sowie des Mittelstegs 7 sind durch die Breite des oberen und unteren Quersteges 1,2 vorgegeben. Die Holme der Seitenstege 3, 4 und des Mittelstegs 7 dienen gleichzeitig als Abstandshalter zu benachbarten Elektroden, so daß auch bei zunehmender Metallabscheidung auf einer als Kathode dienenden Elektrode eine ausreichende Elektrolytzufuhr gewährleistet ist.

Die Querstege 1,2 sowie die Seitenstege 3,4, und das Mittelteil 7 bestehen aus einem elektrolytbeständigen Kunststoff; die Schrauben zur Verbindung der Holme der Seitenstege und des Mittelstegs bestehen aus einem elektrolytbeständigen Werkstoff, insbesondere Kunststoff.

Die zur Stromableitung vorgesehene Plattenfahne ist mit Ziffer 17 bezeichnet.

Figur 2 zeigt eine Ausführungsform, in der ein oberer Quersteg 18 und ein unterer Quersteg 19 durch jeweils einen linken und einen rechten Seitensteg 20,21 miteinander zu einem Rahmen 5 verbunden sind, wobei ebenso, wie anhand der Figur 1 erläutert, Schraubverbindungen mittels Schrauben 22,23 im mittleren Bereich, 23,24 im oberen Bereich und 25,26 im unteren Bereich vorgesehen sind, um die Holme 20',20",21',21" der Seitenstege zusammenzufassen. Die Querstege 18,19 sind ebenso, wie anhand der Figur 1 erläutert, mit den jeweiligen Enden der Seitenholme 20" und 21" durch verschweißen fest verbunden. Die beiden Querstege 18,19 sowie die Seitenstege 20,21 weisen auf ihrer zum Rahmeninneren gerichteten Seite Öffnungen 28 zur Durchführung eines Fadens 29 aus elektrisch isolierendem Werkstoff auf, welcher nach Art eines Trampolins die Elektrode 6 in der Mitte des Rahmens 5 elastisch eingespannt hält. Dabei ist es auch möglich, anstelle eines durchlaufenden Fadens jeweils pro Quersteg oder Seitensteg Einzelfäden zur Halterung der Elektrode einzusetzen. Im Bereich der Seitenstege 20,21 ist zwecks Vereinfachung der Halterung jeweils nur ein Holm des linken und rechten Seitenstegs 20,21 mit dem Faden 29 verbunden. Die öffnungen 28 weisen einen größeren Durchmesser als der Faden 29 auf, wobei der Faden durch die Streckmetallöffnungen am Rande der Elektrodenplatte 6 geführt und gespannt ist. Die Elektrodenplatte ist an einer Seite mit einer Plattenfahne 17 zur Stromzuführung versehen.

## Patentansprüche

1. Elektrodenanordnung für elektrolytische Zwecke, insbesondere zur elektrolytischen Abscheidung von Metallen aus Metallionen enthaltender Flüssigkeit, bestehend aus einem aus Seitenstegen (3, 4) und Querstegen (1, 2) gebildeten Rahmen (5) mit einer aus elektrisch isolierendem, korrosionsbeständigem Kunststoff bestehenden Oberfläche und einer zwischen seinen Seitenstegen angeordneten plattenförmigen Elektrode (6), wobei wenigstens zwei Seitenstege (3, 4) als Abstandshalter ausgebildet sind, dadurch gekennzeichnet, daß die Elektrode (6) aus einer ungewalzten Streckmetall-Folie besteht, die wenigstens 85 Gewichts-% Kupfer, Nickel, Zinn oder Blei enthält und eine Dicke von 0,03 bis 0,3 mm sowie eine Stegbreite im Bereich von 2,2 bis 6 mm aufweist und daß die Streckmetall-Folie mit einem Kontaktstreifen elektrisch und mechanisch fest verbunden ist, welcher mit einer Plattenfahne (17) versehen ist.

2. Elektrodenanordnung nach Anspruch 1, dadurch gekennzeichnet, daß das Verhältnis von Maschenweite zur Länge einer Raute der Streckmetall-Folie im Bereich 1:2 liegt.

3. Elektrodenanordnung nach Anspruch 1 oder 2, dadurch gekennzeichnet, daß das Verhältnis der Maschen-(Steg-)Breite zur Maschen-(Steg-)Länge der Streckmetall-Folie im Bereich von 1:5 bis 1:2 liegt.

4. Elektrodenanordnung nach einem der Ansprüche 1 bis 3, dadurch gekennzeichnet, daß mehrere Elektrodenplatten mit einer Wandstärke im Bereich von 0,04 bis 0,25 mm mit Abstand zueinander angeordnet sind, wobei das Verhältnis der Wandstärke zum Abstand benachbarter Elektrodenplatten im Bereich von 1:50 bis 1:300 liegt.

## Claims

1. Electrode arrangement for electrolytic purposes, especially for the electrolytic separation of metals from liquid containing metal ions, consisting of a frame (5) formed from side members (3, 4) and transverse members (1, 2) and having a surface consisting of electrically insulating, corrosion-resistant plastic and a plate-like electrode (6) arranged between its side members, at least two side members (3, 4) being formed as spacers, characterized in that the electrode (6) consists of an unrolled expanded metal sheet which contains at least 85% by weight of copper, nickel, tin or lead and has a thickness of 0.03 to 0.3 mm and a web width in the range of 2.2 to 6 mm, and that the expanded metal sheet is firmly connected electrically and mechanically to a contact strip which is provided with a plate lug (17).

2. Electrode arrangement according to Claim 1, characterized in that the ratio of mesh size to the length of a rhombus of expanded metal sheet is in the region of 1:2.

3. Electrode arrangement according to Claim 1 or 2, characterized in that the ratio of the mesh (web) width to the mesh (web) length of the expanded metal sheet is in the range from 1:5 to 1:2.

4. Electrode arrangement according to any of Claims 1 to 3, characterized in that a plurality of electrode plates having a wall thickness in the range from 0.04 to 0.25 mm are arranged a distance apart, the ratio of the wall thickness to the distance between adjacent electrode plates being in the range from 1:50 to 1:300.

## Revendications

1. Disposition d'électrode pour des procédés électrolytiques, en particulier pour le dépôt électrolytique de métaux à partir d'un liquide contenant des ions métalliques, constitué d'un cadre (5) formé d'entretoises latérales (3, 4) et d'entretoises transversales (1, 2) présentant une surface constituée d'une matière plastique électriquement isolante, résistante à la corrosion et d'une électrode (6) en plaque disposée entre ses entretoises latérales, au moins deux entretoises latérales (3, 4) étant formées comme un écarteur, caractérisée en ce que l'électrode (6) est constituée d'une feuille de métal déployé non laminée, qui contient au moins 85 % en poids de cuivre, de nickel, d'étain ou de plomb et présente une épaisseur de 0,03 à 0,3 mm ainsi qu'une largeur d'entretoise dans le domaine de 2,2 à 6 mm, et en ce que la feuille de métal déployée est électriquement et mécaniquement reliée de manière non détachable à une bande de contact, laquelle est munie d'une queue de plaque (17).

2. Disposition d'électrode selon la revendication 1, caractérisée en ce que le rapport de la largeur de maille à la longueur d'un losange de la feuille de métal déployé se trouve dans le domaine de 1:2.

3. Disposition d'électrode selon la revendication 1 ou 2, caractérisée en ce que le rapport de la largeur de maille-(entretoise) à la longueur de maille(entretoise) de la feuille de métal déployé se trouve dans le domaine de 1:5 à 1:2.

4. Disposition d'électrode selon l'une quelconque des revendications 1 à 3, caractérisée en ce qu'on dispose plusieurs plaques d'électrodes présentant une épaisseur de paroi dans le domaine de 0,04 à 0,25 mm espacées les unes des autres, le rapport de l'épaisseur de paroi à la distance des plaques d'électrodes voisines se trouvant dans le domaine de 1:50 à 1:300.
